(19) Europäisches Patentamt
European Patent Office
Office européen des brevets

(11) EP 1 962 220 A1

(12) **EUROPEAN PATENT APPLICATION**

(43) Date of publication:
**27.08.2008 Bulletin 2008/35**

(51) Int Cl.:
***G06F 21/00*** *(2006.01)*

(21) Application number: **08157802.3**

(22) Date of filing: **08.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **10.11.2005 US 735513 P
10.11.2005 US 735772 P
07.11.2006 US 594524**

(62) Document number(s) of the earlier application(s) in accordance with Art. 76 EPC:
**06837233.3 / 1 955 249**

(71) Applicant: **NTT DoCoMo, Inc.
Tokyo 100-6150 (JP)**

(72) Inventors:
• **Chander, Ajay
San Francisco, CA 94110 (US)**
• **Yu, Dachuan
Santa Clara, CA 95051 (US)**

(74) Representative: **Bartle, Robin Jonathan
W.P. Thompson & Co.
Coopers Building
Church Street
Liverpool L1 3AB (GB)**

Remarks:
This application was filed on 06-06-2008 as a divisional application to the application mentioned under INID code 62.

(54) **A method and apparatus for detecting and preventing unsafe behavior of javascript programs**

(57)    A method and apparatus is disclosed herein for detecting and preventing unsafe behavior of script programs. In one embodiment, a method comprises performing static analysis of a script program based on a first safety policy to detect unsafe behavior of the script program and preventing execution of the script program if a violation of the safety policy would occur when the script program is executed.

Figure 1

EP 1 962 220 A1

## Description

### PRIORITY

The present patent application claims priority to and incorporates by reference the corresponding provisional patent application serial no. 60/735,772, titled, "A Method and Apparatus for Detecting and Preventing Unsafe Behavior of JavaScript Programs," filed on November 10, 2005 and provisional patent application serial no. 60/735,513, titled, "A Method and Apparatus for Policy-Guided Transformation of JavaScript Programs to Guarantee Safety," filed on November 10, 2005.

### FIELD OF THE INVENTION

The present invention relates to the field of computer programming; more particularly, the present invention relates to detecting and preventing unsafe behavior of programs.

### BACKGROUND OF THE INVENTION

Web browser security is a serious problem. Numerous attacks have been leveraged against client-side browsers to compromise the integrity of sensitive user information (passwords, online identity) and to severely degrade the performance of client machines. These attacks often abuse the computational facilities found in popular client-side scripting languages like JavaScript, or abuse implementation errors in browsers and script interpreters. The security situation is potentially worse on cell phone devices with a greater variety of mobile browsers (and potential security flaws) and opportunities for malicious scripts to misuse device resources.

Some examples of common and harmful attacks include cross-site scripting, phishing, denial of service, and API misuse, as elaborated below.

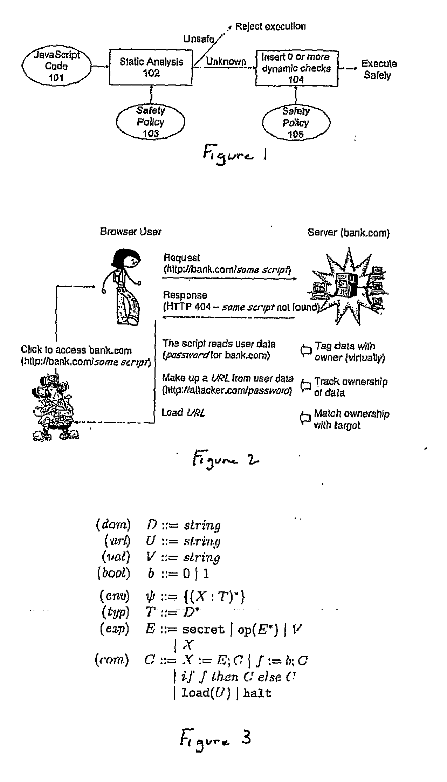

Cross-site scripting (XSS) is one of the most critical security vulnerabilities commonly seen in web-based applications. Such a vulnerability allows an attacker to inject a piece of script (e.g., JavaScript) into a web page produced by a trusted web server. A browser executes the inject script as if it is provided by the server. Since the security restrictions of a browser is based on the origin of the web page, the script is executed by the browser under the same permission as the domain of the web application, by-passing the security restrictions. This situation is described in Figure 2. In general, XSS vulnerabilities are very easy to exploit. It could start from an innocent user clicking a link from an email or an instant message, or simply reading a web forum. Exploiting XSS vulnerabilities, a malicious party can launch a variety of attacks, ranging from annoying behaviors (e.g., change of browser home page), to the presentation of false information (e.g., by dynamically modifying the hosting HTML), to account hijacking (e.g., by stealing a user's login and password from the cookie). Combined with exploits of implementation flaws of the browser (security holes), it would be possible for an attacker to wreak further havoc, such as reading user files and executing malicious programs.

Because JavaScript provides access to a few handset resources either through the Document Object Model (DOM) or through various APIs that provide network access, there is the possibility of malicious JavaScript code abusing these resources. The resources of interest include: disk space, by virtue of JavaScript being allowed write access to cookies, which are a part of the DOM; network usage, by virtue of JavaScript being able to open connections with the site it originated from (In particular, such usage may be hidden inside of windows spawned from the one that has the user's attention, thus resulting in unintended network usage.); user interface elements, such as window size, positioning, etc. (JavaScript has the ability to modify these attributes for windows that it opens, via the DOM.); and expected functionality of browser elements, such as the "back button", etc. (Malicious JavaScript can reprogram the events that take place when the thread of control attempts to leave a particular page, either through the back button or by clicking on a different link. Such malicious JavaScript can take arbitrary action, such as opening multiple windows, etc.).

Phishing (a.k.a. spoofing) is a form of attacks based on social engineering. It tricks the victim into giving out sensitive information (e.g., passwords and credit card numbers) by masquerading as a trusted party (e.g., a bank website). There have been a growing number of phishing attacks, and the targets are typically customers of banks and online payment services. The damage caused by these attacks can be as severe as substantial financial loss and identity theft.

In browsers such as IE, JavaScript has access to the user's clipboard through an object named clipboardData. This object provides APIs for three clipboard activities: clearing, reading and writing. For example, the following simple script reads text from the clipboard and displays it in the browser.

```
document.write(window.clipboardData.getData('Text') ) ;
```

It is not difficult to see that the clipboard can potentially serve as a resource shared between the current webpage and other parts of the system. This may present a channel for bypassing the same-origin policy. The object clipboardData is not intended to transfer data between pages that originate from different domains. Unfortunately, the above line of simple script successful retrieves the clipboard data, even if the data was not set previously by a page from the current domain.

Some malicious use of JavaScript APIs may cause annoying effects or facilitate the launch of other attacks. One common such exploit is the use of pop-ups (and pop-unders). There are many pop-up blockers available today.

Some existing solutions to scripting attacks are ad-hoc and rather limited. First, implementation loopholes may be plugged by applying patches, but the personal computing experience of the last 15 years has shown that such proactive behavior cannot be counted on. Second, browser plugin tools exist to protect against annoyances such as pop-ups, and to provide heuristics to detect phishing attacks. However, the safety policies implicitly used by these tools are not extensible by the user or the operator, and capture only very specific instances of a particular attack category rather than the entire attack category itself. For example, a pop-up blocker doesn't limit the number of windows opened by JavaScript, or their position, or whether such windows perform unintended network communication.

## SUMMARY OF THE INVENTION

A method and apparatus is disclosed herein for detecting and preventing unsafe behavior of script programs. In one embodiment, a method comprises performing static analysis of a script program based on a first safety policy to detect unsafe behavior of the script program and preventing execution of the script program if a violation of the safety policy would occur when the script program is executed.

## BRIEF DESCRIPTION OF THE DRAWINGS

The present invention will be understood more fully from the detailed description given below and from the accompanying drawings of various embodiments of the invention, which, however, should not be taken to limit the invention to the specific embodiments, but are for explanation and understanding only.

**Figure 1** is a block diagram illustrating a general framework for deploying the disclosed techniques based on static analysis.

**Figure 2** illustrates a cross-site scripting example.

**Figure 3** shows an abstraction of the essentials of JavaScript and the DOM APIs relevant to XSS.

**Figure 4** is a block diagram of one embodiment of a process for flow-based instrumentation.

**Figure 5** is an example of JavaScript instrumentation illustrating flow-based instrumentation.

**Figure-6** is a block diagram of a system to perform instrumentation.

**Figure 7** is a block diagram of a system to perform instrumentation and optimization.

**Figure 8** is a block diagram of the general framework deploying the disclosed techniques based on code rewriting.

**Figure 9** is a block diagram of one embodiment of a system to perform the code rewriting in the context of abuse-able APIs.

**Figure 10** is a block diagram of an alternative embodiment of a system to perform the code rewriting in the context of abuse-able APIs.

**Figure 11** is a block diagram of one embodiment of a general architecture for the deployment of the techniques disclosed, and

**Figure 12** is a block diagram of one embodiment of a computer system.

## DETAILED DESCRIPTION OF THE PRESENT INVENTION

Various techniques are presented to detect and prevent the violation of a given safety policy by script (e.g., JavaScript) programs. The techniques described herein can be used to protect against cross-site scripting attacks, denial-of-service attacks, and other attacks that abuse implementation flaws of the browser and/or JavaScript interpreter. In one embodiment, the techniques employ both static analysis and dynamic monitoring to filter incoming scripts. Scripts that have passed the filters are either provably safe with respect to the safety policy, or instrumented to stop execution just prior to a safety violation at run-time. One feature of these techniques is that the script semantics are not modified, thereby ensuring that any useful functionality in the script is not accidentally modified.

Various techniques are also presented to constrain the behavior of untrusted scripts based on a given safety policy. The techniques described herein can be used to protect against phishing, misuse of shared resources, malicious API usage, unexpected behaviors, and denial-of-service attacks. In one embodiment, the techniques employ code rewriting on the target script. Instead of stopping potentially malicious scripts, the code is modified so that it is safe to execute. Consequently, in one embodiment, the resulting script is guaranteed to have no run-time errors. One distinctive feature of these techniques is that the script semantics are modified during the analysis to prevent premature termination of well-intended scripts (less false positives). This is complementary to the techniques described in the preceding paragraph that disallows violations of policies by static analysis and dynamic monitoring.

In one embodiment, safety properties are expressed in an extensible policy specification language that can cover a variety of attacks, and architectures are presented that can be used to deploy these techniques in the context of scripting languages like, for example, JavaScript. In one embodiment, a policy language is used for writing filters and instrumentors for protection against many different kinds of attacks. Below, examples are given as to on how these help protect against XSS, phishing, DOS, and unvalidated input and arguments. These can also help in deploying fast pre-patch filters before a security patch or a virus definition is developed.

In the following description, numerous details are set forth to provide a more thorough explanation of the present invention. It will be apparent, however, to one skilled in the art, that the present invention may be practiced without these specific details. In other instances, well-known structures and devices are shown in block diagram form, rather than in detail, in order to avoid obscuring the present invention.

Some portions of the detailed descriptions which follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description below. In addition, the present invention is not described with reference to any particular programming language. It will be appreciated that a variety of programming languages may be used to implement the teachings of the invention as described herein.

A machine-readable medium includes any mechanism for storing or transmitting information in a form readable by a machine (e.g., a computer). For example, a machine-readable medium includes read only memory ("ROM"); random access memory ("RAM"); magnetic disk storage media; optical storage media; flash memory devices; electrical, optical, acoustical or other form of propagated signals (e.g., carrier waves, infrared signals, digital signals, etc.); etc.

Overview of Techniques Based on Static Analysis

Static analysis techniques are described herein that can be used to prevent against a variety of attacks, including cross-site scripting, denial-of-service attacks, abuse of APIs, and fit into a common extensible policy-based framework. Figure 1 is a block diagram illustrating a general framework for deploying such techniques. Referring to Figure 1, program code 101 (e.g., JavaScript code) is input into a static analyzer 102. Based on a safety policy 103, static analyzer 102 inspects program code 101, trying to determine its safety statically without executing it. In the case of unsafe code, static analyzer 102 rejects the code outright. Otherwise, the program code is input into dynamic annotator 104, which instruments program code 101 with 0 or more dynamic checks that ensure that no run-time violations occur. In one embodiment, dynamic annotator 104 places these checks only at positions whose run-time result cannot be statically determined. These checks are used to stop the execution of the program if a violation is about to occur at runtime. In one embodiment, a policy language and associated techniques are provided for writing code filters for protection against many different kinds of attacks.

Protecting against Cross-Site Scripting Attacks

In one embodiment, a client-side solution is provided. The approach is based on the protection of critical user resources by focusing on critical operations that affect user security, as opposed to identifying which piece of script is malicious and filtering those malicious scripts. In so doing, this approach raises warnings for the users' discretion.

For purposes herein, all critical resources are treated uniformly, and are referred to as secret. The secret may be any of the following entities, for example: a cookie file; password fields (or text boxes with type "password"); browser settings; data from an uninitialized clipboard; and history entries. For purposes herein, all the network requests to a URL are treated uniformly as load (URL). The *load* may be any of the following entities, for example: for loading the current page (e.g., location.href = URL); for forms (e.g., action = URL); for images (e.g., img src = URL); for frames (e.g., iframe src = URL); and for layer objects: load (URL, width).

Based on the above uniform treatment of user resources, Figure 3 shows an abstraction of the essentials of JavaScript and the DOM APIs that are relevant to xSS. Domains name D, URL U, and value V are all strings. Booleans b are either 0 or 1. Environments $\Psi$ map variables X to types T. A type T is a list of domain names. Expressions are either secret, operations on sub expressions op, values V, or variables X. Commands are either assignments, conditionals, network requests, or terminations.

Flow-based Instrumentation

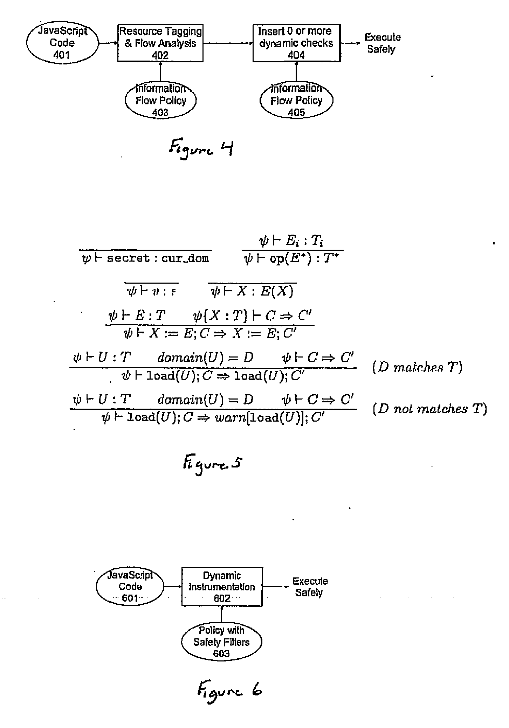

In one embodiment, critical user resources are tagged by the static analyzer with their owner (domain name, as used by the same-origin policy), their information flow is analyzed by the static analyzer, and a run-time check (warning) is inserted by the dynamic annotator at programs points where critical information is about to be sent to a domain different than the origin of the current HTML. Figure 4 is a block diagram of one embodiment of a process for flow-based instrumentation, which is a specialized instance of the disclosed generic techniques based on static analysis. Referring to Figure 4, JavaScript code 401 is input into and received by flow analyzer 402, which tags various resources of the code (e.g., URLs, cookies, etc.) according to an information flow policy 403. The result tagged code is input into a dynamic annotator 404 to insert checks at program points identified by the flow analyzer 402. In one embodiment, the resulting code will always execute safely at run-time, because the inserted checks will stop program execution if violation is about to occur.

Figure 5 is an example of JavaScript instrumentation, which articulates how the tags are annotated and checks are inserted. It is carried out with the help of a static environment $\Psi$. This environment helps to determine the secrecy of expressions. An expression contains secret information of the current domain if either one of the following holds: the expression is secret; the expression contains secret sub-expressions as arguments; and the expression is a variable that has been tagged with the current domain name.

The instrumentation system inspects the program code and performs changes to it when needed. For an assignment, the system updates the environment so that the target of the assignment is tagged with the corresponding secrecy. For loading a URL, the system inserts a warning for the user's discretion, if the URL contains secret information that does not belong to the target domain as written in the URL. The system does not change other commands during the instrumentation; these rules are trivial and omitted.

Relaxed Instrumentation

In alternative embodiments, some relaxed approaches can be more easily deployed (less rules) but are less accurate (potentially more user interactions). A combination of the following alternative embodiments can be used.

In one alternative embodiment, to prevent load (URL) after reading secret, the following instrumentation is performed. At the beginning of a program, a global flag variable is used for user resources. Once secret entities are read, this flag is set. Before an API call that may leak these resources, code is inserted to check if the flag is set. The API proceeds as normal if the flag is not set. Otherwise, the inserted code will raise a warning to the user and ask whether to proceed. The rules guiding the instrumentation are given as follows.

$$\frac{f \text{ is fresh} \quad \psi \vdash Program \Rightarrow Program'}{\psi \vdash Program \Rightarrow f := 0; Program'}$$

$$\frac{}{secret(\texttt{secret})} \qquad \frac{\exists i. secret(E_i)}{secret(\text{op}(E^*))}$$

$$\frac{secret(E) \qquad \psi \vdash C \Rightarrow C'}{\psi \vdash X := E; C \Rightarrow f := 1; X := E; C'}$$

$$\frac{\psi \vdash C \Rightarrow C'}{\psi \vdash \texttt{load}(U); C \Rightarrow if \ f \ then \ warn[\texttt{load}(U)] \ else \ \texttt{load}(U); C'}$$

In another alternative embodiment, to prevent secret embedded in load (URL), and meanwhile disallow the use of variables in the argument of load, the following instrumentation is performed. Specifically, the URL is analyzed as the argument of load and is checked to determine whether it contains secret or variables.

$$\frac{U = \texttt{secret}}{NOK(U)} \qquad \frac{\exists i. NOK(E_i)}{NOK(\text{op}(E^*))} \qquad \frac{U = X}{NOK(U)}$$

$$\frac{not \ NOK(U) \qquad \psi \vdash C \Rightarrow C'}{\psi \vdash \texttt{load}(U); C \Rightarrow \texttt{load}(U); C'}$$

$$\frac{NOK(U) \qquad \psi \vdash C \Rightarrow C'}{\psi \vdash \texttt{load}(U); C \Rightarrow warn[\texttt{load}(U)]; C'}$$

In one embodiment, to disallow pointers to script from a domain different than the origin of the current HTML, the following instrumentation is performed. When loading an URL, the domain of the URL and the target of the URL is checked. If the domain is not the current domain and the target is a JavaScript file, then a warning is inserted and the user is asked whether to proceed. Otherwise, the loading proceeds as usual.

$$\frac{domain(U) \neq \texttt{cur\_dom} \qquad parse(U) = javascript \qquad \psi \vdash C \Rightarrow C'}{\psi \vdash \texttt{load}(U); C \Rightarrow warn[\texttt{load}(U)]; C'}$$

$$\frac{domain(U) = \texttt{cur\_dom} \ or \ parse(U) \neq javascript \qquad \psi \vdash C \Rightarrow C'}{\psi \vdash \texttt{load}(U); C \Rightarrow \texttt{load}(U); C'}$$

In one embodiment, the instrumentation can be applied together with other supplementary techniques to reduce the number of false positives. For instance, white-lists (black-lists) are useful to allow (block) known safe (vulnerable) sites.

Protecting Against Denial-of-Service Attacks

In one embodiment, in order to detect and prevent denial-of-service attacks, restrictions are placed on API calls that are related to resource abuse. A specification language defined to express such restrictions is given below.

```
Policy := (FunctionSpec, InstrumentationSpec)
FunctionSpec := (FunctionName, Arglist)
Arglist := Arg *
Arg := Var | Const
InstrumentationSpec := Instrumentation *
Instrumentation := Pred(Arg) | StaticPred(Arg)
Pred(Arg) := Compare(Arg, Arg) |
     Pred(Arg) AND Pred(Arg)|
     Pred(Arg) OR Pred(Arg)|
     NOT Pred(Arg)|
     Fun(Arg)
StaticPred(Arg) := Compare(Arg, Const)|
     StaticPred(Arg) AND StaticPred(Arg)|
     StaticPred(Arg) OR StaticPred(Arg) |
     NOT StaticPred(Arg)
Fun(Arg) := Arg IN Arg*
Compare(x,y) :=x=y|x<y|x>y|
     Compare (x, y) AND Compare (x, y)
```

A safety policy is expressed in the language above. Whenever a given piece of JavaScript code matches a function call in the policy, then the corresponding dynamic check is inserted just prior to the call. Figure 6 is a block diagram of a system to perform the instrumentation. Referring to Figure 6, program code 601 (e.g., JavaScript code) is input to and received by dynamic instrumentation unit 602 that matches a function call specified in the policy 603, which contains safety filters. If a match is found, dynamic instrumentation unit 602 adds a dynamic check prior to the function call. Once finished, dynamic instrumentation unit 602 outputs the code in a form that executes safely.

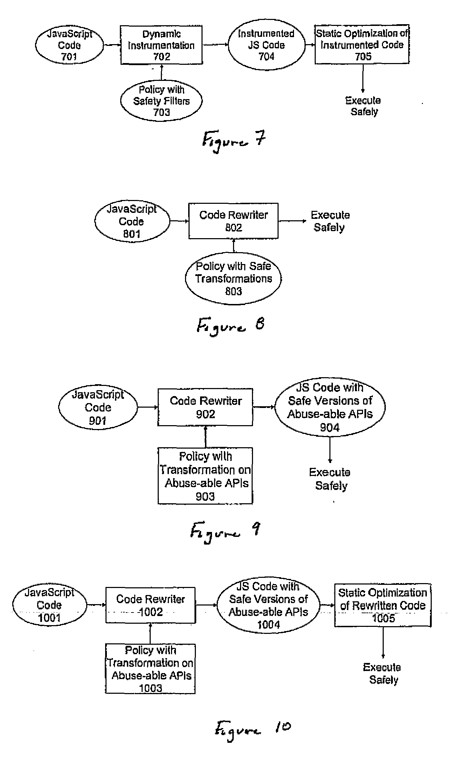

In one embodiment, further static optimization of the inserted dynamic instrumentations is performed. This is expressed via StaticPred instrumentations in the language above. If a safety policy match with a given piece of JavaScript code includes some StaticPred as part of the instrumentation, then a static determination is made as to whether those predicates hold or not. This may eliminate some of the dynamic instrumentations, thereby increasing the efficiency of the final code, as well as possibly pre-empting the execution of the entire code in case one of the StaticPred fail. Figure 7 is a block diagram of a system to perform this instrumentation. Referring to Figure 7, program code 701 (e.g., JavaScript code) is input to and received by dynamic instrumentation unit 702 that matches a function call specified in the policy 703, which contains safety filters. If a match is found, dynamic instrumentation unit 702 adds a dynamic check prior to the function call. Once finished, dynamic instrumentation unit 702 outputs instrumented code 704. Thereafter, instrumented code 704 is input to static optimization unit 705 that determines whether the StaticPred predicates hold or not. For those that hold statically, the corresponding dynamic checks added by dynamic instrumentation unit 702 are removed from instrumented code 704. Then, the result code is output.

Overview of Techniques Based on Code Rewriting

Code rewriting techniques are set forth below that can be used to combat a variety of attacks, including phishing, misuse of shared resources such as the clipboard, malicious API usage, unexpected behaviors, and denial-of-service attacks. Figure 8 is a block diagram of the general framework of one embodiment of these techniques. Referring to Figure 8, program code 801 (e.g., JavaScript code) is received by code rewriting unit 802. Based on a safety policy 803 that specifies safe transformations, code rewriting unit 802 replaces potentially malicious (JavaScript) code in program code 801 with a safe version of the code that carries out the same functionality. In one embodiment, the JavaScript code can always be executed safely without run-time errors, since the transformations specified by the safety policies carefully change the semantics of the code to guarantee safety.

In one embodiment, these techniques include a policy language and associated techniques for specifying code rewriters for protection against many different kinds of attacks, details of which are given below.

Protecting against Phishing

To protect against phishing, in one embodiment, users are presented with the actual information of websites, thus making it harder for an attacker to masquerade as someone else. Origin of a Web Page

With respect to the origin of web page, the location bar of a browser displays a URL from which the current webpage is loaded. Its content is outside of the control of JavaScript. However, JavaScript has the capability to hide the location bar all together when opening a new window (e.g., a pop-up). This is often used by phishing attacks for hiding the origin of the current webpage. A related navigational control of the browser is the status bar. JavaScript may update the content of the status bar with arbitrary text. It may also choose not to display the status bar.

In one embodiment, the instrumentation unit instruments the content of the webpage so that the location bar and the status bar are properly displayed based on a customizable policy given by the browser user. This may be accomplished by inspecting the API use of the webpage for opening new windows, and rewriting the code that hides useful navigational controls.

The following shows an example instrumentation for the creation of a new window. In the implementation, the ways of setting the location and status flags to false are checked, including setting them to false, no, or 0, or simply omitting them.

open(URL, windowName, location=false, status=false)

⇒ open (URL, windowName, location=true,

status=true)

There are other ways (APIs) for a script to open a new window. For example, chromeless pop-up windows can be created with a special API createPopup. In one embodiment, the instrumentation unit instruments the code based on the user's policy. If the policy is to allow chromeless pop-ups (choosing this option suggests that the user believe themselves to be educated enough not to fall for phishing attacks inside a chromeless pop-up windows, e.g., by never clicking on any links in them), the call to this API is left as is. If the policy is not to allow chromeless pop-ups, the instrumentation unit writes the call to this API with the basic open API.

Updating the Status Bar

In one embodiment of the techniques, with respect to updating status bar, incoming code is rewritten so that the origin of the page is displayed in the status bar. Naively, this can be done by inserting the following script in all windows: window.status=location.href.

In practice, web pages make use of the status bar to display various information. In one embodiment, the code instrumentation unit instruments the access to the status bar to display a concatenation of the given text information and the origin of the page.

window.status="Welcome to DoCoMo USA Labs!"

⇒ window.status=location.href + " | " + "Welcome

to DoCoMo USA Labs!"

In one embodiment, dynamic features of HTML are used to display the origin of the page and the given text information in alternate. An example of such requires the use of advanced JavaScript features such as timer APIs. In one embodiment, beside the origin (domain name), even more information about the current webpage is revealed. Some examples include where it is hosted and when it is created. It is also possible to display such information in a separate area of the browser window, or in a "balloon."

As a summary, by instrumenting the program (e.g., JavaScript) code, information about the hosting domain of the webpage is clearly displayed. This helps users to evaluate fraudulent URLs (e.g. curious.com is unlikely to be the website of Citibank, or Bank of America is unlikely to be hosted in Japan).

Deceiving URLs

Attackers make use of special characters in URLs to deceive the users. By inspecting the content of the webpage, we can identify such suspicious URLs.

The symbol @ is sometimes used in URLs. The original intention is to allow the inclusion of user name and/or password fields in front of the symbol. The real target of the URL is the domain name following. For instance, http://docomo.com@curious.com refers to curious.com, not docomo.com. Such URLs may trick the users into believing in a fake origin of the page. Upon identifying such URLs, we could use the previous techniques to present the actual domain name to the user.

Similarly, http://www.docomo.com.curious.com/ is also deceiving. In addition, the use of a percentage sign followed by numbers (escape sequences) typically have no practical use other than to deceive. In one embodiment, all these suspicious URLs are analyzed and parsed properly before presenting to users.

Common existing methods can be used in complementary with the above techniques. On the one hand, one can maintain a blacklist knowledge base of known phishing domains. On the other hand, one can maintain a white list of the domain names of large financial organizations, and use pattern matching to search for deceiving URLs (e.g., DOCOMO.COM vs. DOCOMO.COM). It is likely to be effective, because the attackers typically target organizations with a large number of users so that the chance that someone falls for the attack is high.

Protecting Against Misuse of Shared Resources

In browsers such as IE, JavaScript has access to the user's clipboard through an object named clipboardData. This object provides APIs for three clipboard activities: clearing, reading and writing. For example, the following simple script reads text from the clipboard and displays it in the browser.
document.write(window.clipboardData.getData('Text') );
It is not difficult to see that the clipboard can potentially serve as a resource shared between the current webpage and other parts of the system. This may present a channel for bypassing the same-origin policy. The object clipboardData is not intended to transfer data between pages that originate from different domains. Unfortunately, the above line of simple script successfully retrieves the clipboard data, even if the data was not sent previously by a page from the current domain.
The clipboard example described above is used herein as a canonical example for this category of attacks. In one embodiment, a clearing of the clipboard data is forced when the page is loaded if any part of the webpage attempts reading the clipboard. In one embodiment, this is done by inserting the following script at the beginning of the webpage. Simple static analysis is needed to determine whether a clipboard reading occurs inside the page at all.
document.write(window.clipboardData.clearData('Text','UR
L','File', 'HTML','Image'))
In general, this technique can be applied to any potentially shared resources between the current webpage and other parts of the system.

Protecting Against Malicious API Usage

In one embodiment, the limited restrictions of existing browsers are enhanced by rewriting some API calls in ways allowed by the customized policies. In one embodiment, the position and size arguments are modified to relevant windows API calls so that the windows fall into the expected ranges.

```
window.moveto(x,y) =>
window.moveto(x % screen.availWidth, y %
screen.availHeight)

window.resizeTo(x,y) =>
window.resizeTo(((x>screen.availWidth) ?
screen.availWidth : x),
              ((y>screen.availHeight) ?
       screen.availHeight : y))
```

Some API calls cannot be directly instrumented in this way, because the correct instrumentation requires knowledge about the execution history. The APIs moveBy (deltaX, deltaY) and resizeBy (deltaX, deltaY) are two such examples; they change the position and size of a window by offsets, not by absolute values. In this case, the instrumentation is more sophisticated; the instrumentation unit obtains information about the window first, then calculates the target arguments and replaces the calls with different ones. This is illustrated below.

```
window.moveBy(dx,dy) =>
  window.moveto((window.screenX+dx) % screen.availWidth,
              (window.screenx+dx) % screen.availWidth)
window.resizeBy(dx,dy) =>
 window.resizeTo(((window.outerWidth+dx >
screen.avai1Width) ?
                 screen.availWidth :
         (window.outerWidth+dx)),
              ((window.outerHeight+dy >
       screen.availHeight) ?
              screen.availHeight :
```

```
(windaw.outerHeight+dy)))
```

These specific rewriting rules would prevent certain "wild" windows, which are indeed an often exploited means for attacks. For instance, an invisible window (either out of bound or in the background) could connect stealthily to a Web server. Combined with other attacks, it could download keystroke-logging code to your system or upload files or passwords to a remote PC. Together with the use of an anonymous proxy site, the victim cannot even trace the location of the remote computer.

Protecting against Unexpected Behaviors

JavaScript may create various event handlers for useful processing of data or prompt of information when events occur. For instance, a webpage may prompt the user as to whether to save or discard their input before unloading the current content of the browser. This is helpful in case the user accidentally closes the window without submitting or saving the form data. When exploited by a malicious party, the same capability can be used to deploy annoying behaviors such as "persistent" windows that cannot be easily closed by a user. The following is a simple attack that makes use of the onunload event handler to *respawn* a new window right before the current one is closed.

```
<htm1>
<head>
<title>Persistent Window</title>
<script type="text/javascript">
function respawn() {
  window.open(uRL)
}
</script>
</head>
<body onunload="respawn()">
Content of the webpage loaded from URL.
</body>
</html>
```

Note the discrepancy between the semantics of the malicious handler script and the intended use of the handler. In one embodiment, the client is protected against this attack by ignoring the call to the API window.open() when inside an unload handler. Some static analysis is used to inspect the handler's code: the open() API call may not directly reside in the top level code of the handler; it could be enclosed in functions defined separately.

In general, many other event handlers can be exploited in a similar manner. More specifically, for window objects, in one embodiment, API calls are ignored that

open new windows from within the handlers onbeforeunload and onload;
• move and resize the window from within the handlers onmove, onresize, onresizeend and onresizestart;
• change the focus from within the handlers onblur, onbeforedeactivate, ondeactivate, onfocus and onactivate.

Note that this technique is also applicable to other browser objects such as, for example, document and form.

Protecting against Denial-of-Service Attacks

A protection against denial-of-service attacks based on static analysis has been described above. Below we describe another protection against denial-of service attacks based on code rewriting is described.

In order to rein in denial-of-service attacks, in one embodiment, safe behaviors are provided for API calls that are related to such resource abuse. Below, a specification language is defined in which such safe behaviors can be expressed.

A safety policy is expressed in the language below.

```
Policy := (FunctionSpec, SafeFunctionSpec)
FunctiorrSpec := (FunctionName, Arglist)
Arglist := Arg *
Arg := Var | Const
SafeFunctionSpec := (FunctionName, SafeArgList)
SafeArgList := SafeArg*
```

```
SafeArg := IF Safe(Arg) THEN Arg ELSE MakeSafe(Arg)
Safe(Arg) := Pred(Arg) I StaticPred(Arg)
Pred(Arg) := Compare(Arg, Arg) |
             Pred(Arg) AND Pred(Arg)|
             Pred(Arg) OR Pred(Arg)|
             NOT Pred(Arg) |
             Fun(Arg)
StaticPred(Arg) := Compare(Arg, Const) |
          StaticPred(Arg) AND StaticPred(Arg) |
          StaticPred(Arg) OR StaticPred(Arg) |
          NOT StaticPred(Arg)
Fun(Arg) := Arg IN Arg*
Compare(x,y) :=x=y|x<y|x>y|
               Compare (x, y) AND Compare (x, y)
```

Whenever a given piece of JavaScript code matches a function call in the policy, then the corresponding call is replaced with the safe version. Figure 9 is a block diagram of one embodiment of a system to perform the rewriting. Referring to Figure 9, program code 901 (e.g., JavaScript code) is input to and received by code rewriter 902 that matches a function call specified in the policy 903, which contains safe transformations on abuse-able APIs. If a match is found, code rewriting unit 902 replaces the function call with the safe version specified by the policy 1003. Once finished, dynamic instrumentation unit 902 outputs the code 904 with safe versions of abuse-able APIs, which executes safely.

The basic idea in the above specification system is that a function call is paired with a safe version of the call. In the safe version, in one embodiment, guards are put before each argument, as expressed by the SafeArg construct. The guard is, generally speaking, a predicate on the argument, and is implemented by rewriting the function call with the corresponding code just prior to the body of the original function.

In one embodiment, further static optimization of the rewritten code is performed. This is expressed via StaticPred in the language. If a safety policy match with a given piece of JavaScript code includes StaticPred as part of the rewriting, then it is sometimes possible to statically determine whether those predicates hold or not. This provides us with the possibility of optimizing some of the rewritings, thereby increasing the efficiency of the final code, as well as possibly pre-empting the execution of the entire code in case the StaticPred fail. Figure 10 is a block diagram of an alternative embodiment of a system to perform the instrumentation. Referring to Figure 10, program code 1001 (e.g., JavaScript code) is input to and received by code rewriter 1002 that matches a function call specified in the policy 1003, which contains safe transformations on abuse-able APIs. If a match is found, code rewriter 1002 replaces the function call with a safe version specified by the policy 1003. Once finished, code rewriter 1002 outputs the code 1004 with safe versions of abuse-able APIs. Static optimizer 1005 performs the static optimization of code 1004, and thereafter code 1004 executes safely.

State Tracking

In one embodiment, in order to protect against denial-of-service attacks by putting a bound on the number of times a particular API is called, a global variable that tracks this count is used. In order to do this, in one embodiment, the safe transformation language above is used to replace the API in question with a safe version that wraps around the original, but also increments an internal variable every time the original API is called. This technique can thus be used to limit the number of windows spawned by JavaScript, as an example.

An Example of a Deployment Architecture

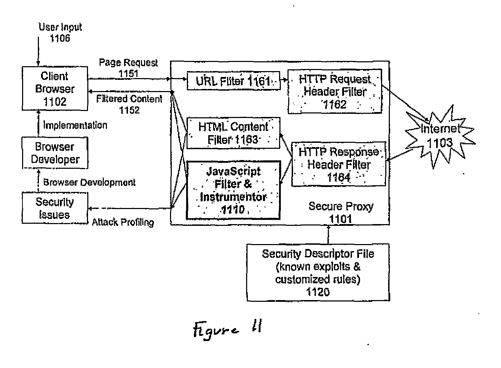

Figure 11 is a block diagram of one embodiment of a general architecture for the deployment of the techniques described above. Referring to Figure 11, secure proxy 1101 resides on the network between the client device running client browser 1102 and the rest of the internet 1103. All traffic to and from the client passes through proxy 1101 where it can be analyzed and content that exploits security flaws can potentially be filtered. In one embodiment, proxy 1101 has filters for handling the different kinds of content that clients fetch from internet 1103, such as HTTP header contents (e.g., URLs) and HTTP response contents (such as JavaScript.). More specifically, client browser 1102 may receive user input 1106. Client browser 1102 generates page requests 1151. Proxy 1101 receives page requests 1151 and filters the URLs with URL filtering 1161 and the HTTP request headers with HTTP request header filter 1162. After filtering, proxy 1101 forwards page requests 1151 to internet 1103. Responses to page requests 1151 from internet 1103 are received by proxy 1101, which filters the headers using HTTP response header filter 1164. After filtering by HTTP response header filter 1164, proxy 1101 filters the content using HTML content filter 1163 and/or JavaScript filter & instrumentor 1110. The filtered content 1152, representing outputs of one or both HTML content filter 1163 and JavaScript filter & instrument or 1110 are output from proxy 1101 and sent to client browser 1102. The outputs of HTML content filter 1163 and JavaScript filter & instrumentor 1110 may also be used to facilitate browser development based on attack profiling of the filtered content.

The techniques described above are performed in the JavaScript Filter & Instrumentor unit 1110.

Security descriptor file 1120 corresponds to any of policy specifications that are enforced by the techniques described above.

An Example of a Computer System

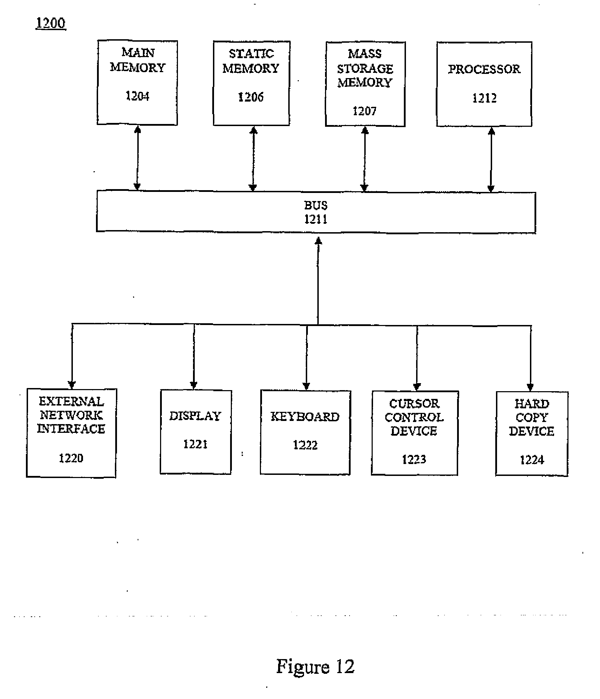

Figure 12 is a block diagram of an exemplary computer system that may perform one or more of the operations described herein. Referring to Figure 12, computer system 1200 may comprise an exemplary client or server computer system. Computer system 1200 comprises a communication mechanism or bus 1211 for communicating information, and a processor 1212 coupled with bus 1211 for processing information. Processor 1212 includes a microprocessor, but is not limited to a microprocessor, such as, for example, Pentium™, PowerPC™, Alpha™, etc.

System 1200 further comprises a random access memory (RAM), or other dynamic storage device 1204 (referred to as main memory) coupled to bus 1211 for storing information and instructions to be executed by processor 1212. Main memory 1204 also may be used for storing temporary variables or other intermediate information during execution of instructions by processor 1212.

Computer system 1200 also comprises a read only memory (ROM) and/or other static storage device 1206 coupled to bus 1211 for storing static information and instructions for processor 1212, and a data storage device 1207, such as a magnetic disk or optical disk and its corresponding disk drive. Data storage device 1207 is coupled to bus 1211 for storing information and instructions.

Computer system 1200 may further be coupled to a display device 1221, such as a cathode ray tube (CRT) or liquid crystal display (LCD), coupled to bus 1211 for displaying information to a computer user. An alphanumeric input device 1222, including alphanumeric and other keys, may also be coupled to bus 1211 for communicating information and command selections to processor 1212. An additional user input device is cursor control 1223, such as a mouse, trackball, trackpad, stylus, or cursor direction keys, coupled to bus 1211 for communicating direction information and command selections to processor 1212, and for controlling cursor movement on display 1221.

Another device that may be coupled to bus 1211 is hard copy device 1224, which may be used for marking information on a medium such as paper, film, or similar types of media. Another device that may be coupled to bus 1211 is a wired/wireless communication capability 1225 to communication to a phone or handheld palm device.

Note that any or all of the components of system 1200 and associated hardware may be used in the present invention. However, it can be appreciated that other configurations of the computer system may include some or all of the devices.

Whereas many alterations and modifications of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims which in themselves recite only those features regarded as essential to the invention.

**Claims**

1. A method comprising:

    analyzing a script program based on a first safety policy; and
    modifying the script program to ensure safe execution the script program.

2. The method defined in Claim 1 wherein the safety policy specifies safe transformations to be used when modifying the script program.

3. The method defined in Claim 1 wherein analyzing the script program includes determining whether the program code includes code to open a window, and wherein modifying the script program comprises instrumenting the program code to ensure to prevent the program code from hiding the window from the user.

4. The method defined in Claim 1 wherein modifying the script program comprises rewriting code corresponding to a status bar displayed as a result of execution of the script program to include addition information, wherein the additional information specifies origin of the page.

**5.** The method defined in Claim 4 wherein the additional information comprises information specifying where the page is hosted.

**6.** The method defined in Claim 4 wherein the additional information comprises information specifying when the page was created.

**7.** The method defined in Claim 1 wherein analyzing a script program based on a first safety policy comprises identifying one or more URLs in which the domain name associated with the one or more URLs is not clear to human readers, and wherein modifying the script program causes the script program to present clearly a correct domain name to the user.

**8.** The method defined in Claim 1 wherein analyzing a script program based on a first safety policy determines if the webpage associated with the script program attempts to read a clipboard, and wherein modifying the script program inserts a script at a location in the script program to force the clipboard to be cleared before the webpage is loaded.

**9.** The method defined in Claim 1 wherein modifying the script program comprises rewriting position and size arguments to one or more API calls to ensure the position and size arguments are within expected ranges.

**10.** The method defined in Claim 1 wherein modifying the script program comprises ignoring one or more API calls for one or more window objects that either open a new window from a specific location specified in the safety policy, move or resize a window from within a handler specified in the safety policy, or change focus of a window from within a handler specified in the safety policy.

**11.** The method defined in Claim 1 wherein modifying the script program comprises replacing code in the script program that matches a function call in the safety policy with a safe version of the function call.

**12.** The method defined in Claim 1 wherein modifying the script program comprises wrapping a function call in the script program with a safe version specified in the safety policy, wherein the wrapped function call includes code to increment an internal variable each time the function call is called.

**13.** An article of manufacture having one or more computer readable media storing instructions thereon which, when executed by a system, cause the system to perform a method comprising:

analyzing a script program based on a first safety policy; and
modifying the script program to ensure safe execution of the script program.

Figure 1

Figure 2

$$(dom) \quad D ::= string$$
$$(url) \quad U ::= string$$
$$(val) \quad V ::= string$$
$$(bool) \quad b ::= 0 \mid 1$$

$$(env) \quad \psi ::= \{(X : T)^*\}$$
$$(typ) \quad T ::= D^*$$
$$(exp) \quad E ::= secret \mid op(E^*) \mid V$$
$$\mid X$$
$$(com) \quad C ::= X := E; C \mid f := b; C$$
$$\mid if \ f \ then \ C \ else \ C$$
$$\mid load(U) \mid halt$$

Figure 3

Figure 4

$$\frac{}{\psi \vdash \texttt{secret} : \texttt{cur\_dom}} \qquad \frac{\psi \vdash E_i : T_i}{\psi \vdash \texttt{op}(E^*) : T^*}$$

$$\frac{}{\psi \vdash n : \varepsilon} \qquad \frac{}{\psi \vdash X : E(X)}$$

$$\frac{\psi \vdash E : T \qquad \psi\{X : T\} \vdash C \Rightarrow C'}{\psi \vdash X := E; C \Rightarrow X := E; C'}$$

$$\frac{\psi \vdash U : T \qquad domain(U) = D \qquad \psi \vdash C \Rightarrow C'}{\psi \vdash \texttt{load}(U); C \Rightarrow \texttt{load}(U); C'} \quad (D \ matches \ T)$$

$$\frac{\psi \vdash U : T \qquad domain(U) = D \qquad \psi \vdash C \Rightarrow C'}{\psi \vdash \texttt{load}(U); C \Rightarrow warn[\texttt{load}(U)]; C'} \quad (D \ not \ matches \ T)$$

Figure 5

Figure 6

EP 1 962 220 A1

JavaScript Code 701 → Dynamic Instrumentation 702 → Instrumented JS Code 704 → Static Optimization of Instrumented Code 705

Policy with Safety Filters 703

Execute Safely

*Figure 7*

JavaScript Code 801 → Code Rewriter 802 → Execute Safely

Policy with Safe Transformations 803

*Figure 8*

JavaScript Code 901 → Code Rewriter 902 → JS Code with Safe Versions of Abuse-able APIs 904

Policy with Transformation on Abuse-able APIs 903

Execute Safely

*Figure 9*

JavaScript Code 1001 → Code Rewriter 1002 → JS Code with Safe Versions of Abuse-able APIs 1004 → Static Optimization of Rewritten Code 1005

Policy with Transformation on Abuse-able APIs 1003

Execute Safely

*Figure 10*

16

Figure 11

1200

| MAIN MEMORY 1204 | STATIC MEMORY 1206 | MASS STORAGE MEMORY 1207 | PROCESSOR 1212 |

BUS
1211

| EXTERNAL NETWORK INTERFACE 1220 | DISPLAY 1221 | KEYBOARD 1222 | CURSOR CONTROL DEVICE 1223 | HARD COPY DEVICE 1224 |

Figure 12

**European Patent Office**

**EUROPEAN SEARCH REPORT**

Application Number

EP 08 15 7802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 983 348 A (JI SHUANG [US]) 9 November 1999 (1999-11-09) | 1-3,7-13 | INV. G06F21/00 |
| Y | * abstract * * column 1, line 5 - column 5, line 27 * * column 7, line 41 - line 64 * | 4-6 | |
| X | US 2005/240999 A1 (RUBIN MOSHE [IL] ET AL) 27 October 2005 (2005-10-27) * abstract * * paragraph [0004] - paragraph [0022]; figures 1-11 * | 1-3,7-13 | |
| Y | ROLF OPPLIGER ET AL: "Effective Protection Against Phishing and Web Spoofing" COMMUNICATIONS AND MULTIMEDIA SECURITY LECTURE NOTES IN COMPUTER SCIENCE;;LNCS, SPRINGER-VERLAG, BE, vol. 3677, 1 January 2005 (2005-01-01), pages 32-41, XP019018473 ISBN: 978-3-540-28791-9 * page 36, paragraph 2 - page 38, paragraph 1 * | 4-6 | |
| A | US 2005/108554 A1 (RUBIN MOSHE [IL] ET AL) 19 May 2005 (2005-05-19) * abstract * * paragraphs [0004] - [0018], [0028] - [0052] * | 1-13 | TECHNICAL FIELDS SEARCHED (IPC) G06F |
| A | US 6 154 844 A (TOUBOUL SHLOMO [IL] ET AL) 28 November 2000 (2000-11-28) * abstract * * figures 1-7 * * column 1, line 62 - column 3, line 6 * | 1-13 | |

The present search report has been drawn up for all claims

| Place of search | Date of completion of the search | Examiner |
|---|---|---|
| Munich | 17 July 2008 | Kleiber, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 60735772 B
- US 60735513 B